# EUROPÄISCHE PATENTANMELDUNG

(11) **EP 3 791 979 A1**
(43) Veröffentlichungstag der Anmeldung: **17.03.2021**
(21) Anmeldenummer: 19196889.0
(22) Anmeldetag: 12.09.2019
(51) Int. Cl.: B23B 31/20

(54) **SPANN-VORRICHTUNG**

(71) Anmelder: SMW-AUTOBLOK Spannsysteme GmbH, 88074 Meckenbeuren (DE)
(72) Erfinder: MAURER, Eckhard, 88094 Oberteuringer (DE)
(74) Vertreter: Engelhardt, Volker

(57) **Zusammenfassung**

Bei einer Spann-Vorrichtung (1) zur zentrierten und wiederholungsgenauen Abstützung eines Gegenstandes (2), insbesondere ein zu bearbeitendes Werkstück an einer Werkzeugmaschine, ein Werkzeug oder dergleichen, bestehend aus,
- einem Futterkörper (3), in dem eine Aufnahmeöffnung (4) eingearbeitet ist, die eine Längsachse (5) als Zentrierbezugsgröße für den Gegenstand (2) aufweist,
- einem Zugelement (6), das axial beweglich in der Aufnahmeöffnung (4) gelagert ist,
- einer Spannzange (7), die zentriert zu der Längsachse (5) der Aufnahmeöffnung (4) in diese eingesetzt ist und die trieblich mit dem Zugelement (6) gekoppelt ist,
und aus einer konischen Zentrierfläche (8), die an der Innenwand im Eingangsbereich der Aufnahmeöffnung (4) angearbeitet ist, soll eine Vielzahl von unterschiedlich groß bemessenen Gegenständen (2) in eine Aufnahmeöffnung (4) eines Futterkörpers (3) einsetzbar und in dieser zentriert arretierbar sein, ohne dass die Futterkörper (3) bzw. deren Aufnahmeöffnungen (4) an die unterschiedlich groß bemessenen Spannzangen (7) anzupassen sind.

Dies ist dadurch erreicht, dass eine Adapterhülse (11) vorgesehen ist, die zwischen der Aufnahmeöffnung (4) des Futterkörpers (3) und der Spannzange (7) im montierten Zustand lageorientiert und zentriert an der konischen Zentrierfläche (8) angeordnet ist, dass die Außenkontur der Adapterhülse (11) an die Innenkontur der Aufnahmeöffnung (4) angepasst ist, dass die Spannzange (7) axial bewegbar in der Adapterhülse (11) gelagert ist, und dass die Innenkontur der Adapterhülse (11) eine nach innen geneigte Anlagefläche (12) aufweist, die mit der Außenkontur der Spannzange (7) derart zusammenwirkt, dass der Innendurchmesser der Spannzange (7) beim Einziehen der Spannzange (7) durch das Zugelement (6) in den Futterkörper (3) reduziert ist und dadurch der Gegenstand (2) durch die Spannzange (7) zentriert und lageorientiert gehalten ist.

## Beschreibung

Die Erfindung bezieht sich auf eine Spann-Vorrichtung zur zentrierten und wiederholungsgenauen Abstützung eines Gegenstandes, insbesondere eines zu bearbeitenden Werkstückes an einer Werkzeugmaschine, Werkzeug oder dergleichen, nach dem Oberbegriff des Patentanspruchs 1.

Derartige Spann-Vorrichtungen werden seit Jahrzehnten zur Halterung von zu bear-beitenden Werkstücken an Werkzeugmaschinen eingesetzt. Dabei ist ein Teilbereich des zu bearbeitenden Werkstückes in der Spannzange angeordnet und von dieser im Raum fixiert, sodass das in den Raum abstehende Teilstücke des Gegenstandes frei zugänglich sind und folglich von Werkzeugen der Werkzeugmaschine bearbeitet werden können. Die Außenkonturen der einzuspannenden Gegenstände geben dabei die Innenkonturen der Spannzange vor, denn diese wird beim Einziehen in den Futterkörper aufgrund der in die Mantelfläche der Aufnahmeöffnung und horizontal zulaufender Anlagefläche zusammengedrückt. Üblicherweise besteht nämlich die Spannzange aus einer Vielzahl von Segmenten, die beispielsweise in einem Vulkanisierungsverfahren in eine entsprechende Form gegeben sind und die Zwischenräume der aus Metall oder einem Federstahl hergestellten Segmente der Spannzange sind über die Vulkanisierung mit Kunststoff- oder Gummi-Material verbunden. Folglich weist die Spannzange eine bestimmte Elastizität in radialer Richtung auf.

In dem Futterkörper ist eine Aufnahmeöffnung eingearbeitet, deren Innenkonturen an die Außenkontur der Spannzange anzupassen ist. Dies bedeutet, dass zum einen die Innenkontur der Aufnahmeöffnung nach innen geneigt auszugestalten ist, um zu gewährleisten, dass die Spannzange beim Einziehen in die Aufnahmeöffnung in radialer Richtung, also in Richtung des einzuspannenden Gegenstandes zusammengedrückt ist, wodurch der Innendurchmesser der Spannzange reduziert ist. Zum anderen ist die Spannzange in der Aufnahmeöffnung in Bezug auf deren Längsachse, die als Bezugsgröße dient, zentriert auszurichten. Die Längsachse der Spannzange und die Längsachse der Aufnahmeöffnung sollen folglich koaxial zueinander verlaufen. Durch das in dem Futterkörper axial beweglich gelagerte Zugelement, das trieblich mit der Spannzange gekoppelt ist, kann eine entsprechend groß bemessene Einzugskraft auf die Spannzange ausgeübt sein, wodurch diese in das Innere der Aufnahmeöffnung eingezogen ist. Aufgrund der vorhandenen Neigungen an der Innenwand der Aufnahmeöffnung entstehen radiale Kraftkomponenten, durch die die über die Vulkanisierung miteinander verbundenen Segmente der Spannzange zusammengedrückt sind und folglich eine Spannkraft auf den in die Spannzange eingesetzten Gegenstand ausüben.

Als nachteilig hat sich herausgestellt, dass zunächst jede Spannzange an die Außenkontur des einzuspannenden Gegenstandes anzupassen ist, wodurch zwangsweise die äußeren Abmessungen der Spannzange - zumindest in einem bestimmten Grenzbereich - vorgegeben sind. Sollte demnach der Außendurchmesser des einzuspannenden Gegenstandes wesentlich größer sein als vorherige Außendurchmesser von anderen Gegenständen, dann kann zwar die jeweilige Spannzange als Sonderbauform angefertigt und verwendet werden, jedoch ist oftmals der Einsatz der derart vergrößerten Spannzange in einem Futterkörper mit einer bestimmten Aufnahmeöffnung nicht möglich. Demnach sind unterschiedlich groß bemessene Aufnahmeöffnung in den Futterkörper vorzusehen, um die vorhandenen Größenunterschiede der Spannzange auszugleichen. Dies bedeutet allerdings, dass an den Werkzeugmaschinen zeitaufwendige und damit kostenintensive Umrüstmaßnahmen durchzuführen sind, wenn sich die Außengeometrie in der zu bearbeitenden Gegenstände wesentlich verändert.

Es ist daher Aufgabe der Erfindung, eine Spann-Vorrichtung der eingangs genannten Gattung derart weiterzubilden, dass eine Vielzahl von unterschiedlich groß bemessenen Gegenständen in eine Aufnahmeöffnung eines Fotokörpers einsetzbar und in dieser zentriert arretierbar sind, ohne dass die Futterkörper bzw. deren Aufnahmeöffnungen an die unterschiedlich groß bemessenen Spannzangen anzupassen sind.

Diese Aufgabe ist durch die Merkmale des kennzeichnenden Teils von Patentanspruch 1 gelöst.

Weitere vorteilhafte Weiterbildungen der Erfindung ergeben sich aus den Unteransprüchen.

Dadurch, dass eine Adapterhülse vorgesehen ist, die zwischen der Aufnahmeöffnung des Futterkörpers und der Spannzange lageorientiert und zentriert an der konischen Zentrierfläche angeordnet ist, dass die Außenkontur der Adapterhülse an die Innenkontur der Aufnahmeöffnung angepasst ist, dass die Spannzange axial bewegbar in der Adapterhülse gelagert ist, und dass die Innenkontur der Adapterhülse eine nach innen geneigte Anlagefläche aufweist, die mit der Außenkontur der Spannzange derart zusammenwirkt, dass der Innendurchmesser der Spannzange beim Einziehen der Spannzange durch das Zugelement in den Futterkörper reduziert ist und dadurch der Gegenstand zentriert und lageorientiert gehalten ist, können eine Vielzahl von unterschiedlich groß bemessenen Gegenständen mit entsprechend daran angepassten Spannzangen in eine identische Aufnahmeöffnung des Futterkörpers eingesetzt und dort zentriert fixiert werden, da die dazwischen angeordnete Adapterhülse einen Raumausgleich vornimmt. Folglich sind entsprechende groß bemessene Adapterhülsen an die Außengeometrie der Spannzange anzupassen und diese können rasch und unkompliziert ausgetauscht werden. Die jeweilige Spannzange bildet demnach mit einer entsprechend daran angepassten Adapterhülse einen Art Bausatz, durch den sowohl die Außengeometrie der zu bearbeitenden Gegenstände als auch die Innengeometrie der Aufnahmeöffnung eines Futterkörpers ausgeglichen sind. Folglich entfallen Umrüstmaßnahmen für den Austausch der Futterkörper mit entsprechend unterschiedlich ausgestalteten Aufnahmeöffnungen.

Da die Adapterhülse ein vereinzeltes Bauteil darstellt, kann dieses vorteilhafter Weise an die bestehenden Innenkonturen der Aufnahmeöffnung in dem verschiedenartig ausgestalteten Futterkörper angepasst sein und gleichzeitig die jeweilige Spannzange aufnehmen und zentriert fixieren. Folglich sind keine Umrüstmaßnahmen an dem Futterkörper vorzunehmen, denn es sind lediglich unterschiedlich ausgestaltete Adapterhülsen für den jeweiligen Einsatzzweck bzw. die vorherrschenden Baugeometrien der einzuspannenden Gegenstände und damit der Spannzangen zu verwenden.

Darüber hinaus können herstellerseitig Bausätze angeboten werden und die jeweiligen Paare von Adapterhülsen und Spannzangen für unterschiedlich einzuspannende Gegenstände angeboten sein. Dies ermöglicht eine äußerst individuelle Bauform, die an den jeweiligen Verwendungszweck angepasst ist und deren Herstellungskosten äußerst gering bemessen sind.

Durch die in der Adapterhülse eingearbeiteten Schlitze, die parallel zu der Längsachse der Aufnahmeöffnung im montierten Zustand verlaufen, die an einem Haltering angeformt sind und von diesem abstehen, ist die Bewegungsmöglichkeit der Spannzange zur Fixierung des zu haltenden Gegenstandes erreicht. Die Schlitze führen nämlich dazu, dass von dem Haltering vereinzelte Segmente abstehen, die nach Art einer Greifzange mit einer Vielzahl von Fingern auf das einzuspannende Werkstück einwirken. Die Spannzange wird nämlich gegen die geneigt verlaufende Anlagefläche der Adapterhülse gepresst, sobald die Spannzange durch das Zugelement in die Aufnahmeöffnung des Futterkörpers eingezogen ist. Da sich der Innendurchmesser der Adapterhülse verringert, werden die Segmente oder Finger der Spannzange in Richtung der Längsachse der Aufnahmeöffnung gedrückt und gelangen zunächst in Wirkkontakt mit dem einzuspannenden Gegenstand und beim weiteren Einziehen der Spannzange in die Aufnahmeöffnung entsteht eine in radialer Richtung wirkende Spannkraft, durch die der Gegenstand in der Spannzange arretiert ist.

Zudem kann der Haltering in vorteilhafter Weise beispielsweise mit einem Bajonettverschluss, der aus drei oder mehr Bajonettöffnungen besteht, versehen sein, um den Haltering mit dem Zugelement zu koppeln. Der Haltering ist demnach lediglich auf die Gegenstücke des Bajonettverschlusses, die dem Zugelement zugeordnet sind, aufzusetzen und durch Verdrehen entsteht eine Hinterschneidung, durch die die axialen Zugkräfte abgestützt und von dem Zugelement auf die Spannzange übertragen sind. Um die Spannzange an dem Zugelement gegen Verdrehen zu sichern, ist eine Schraube vorgesehen, die die Spannzange lageorientiert festhält.

Wenn die Schlitze in Richtung der Längsachse unterschiedlich breit bemessen sind, dann erhöht dies zum einen die Bewegungsmöglichkeit der vereinzelten Segmente oder Finger der Spannzange und zum anderen kann die Anlagefläche zwischen den freien Enden der Segmente oder Finger der Spannzange und dem einzuspannenden Gegenstand vergrößert sein. Dabei können die Schlitze V-förmig in Richtung der Längsachse ausgestaltet sein; die Ausrichtung der V-förmigen Schlitze hängt dabei von der gewünschten Steifigkeit oder Biegeelastizität, die die Spannzange aufzuweisen hat, ab.

Um das Eindringen der Spannzange in die Aufnahmeöffnung zu begrenzen, sind entweder an der außenseitigen Stirnseite der Adapterhülse oder im Inneren des Futterkörpers eine Anlagefläche vorgesehen, durch die der Verstellweg der Spannzange begrenzt ist.

Sobald der Spannzustand erreicht ist, sollte eine einfache und zuverlässige Überprüfung der Ausrichtung der Spannzange in Bezug auf die Längsachse der Aufnahmeöffnung möglich sein. Dies ist dadurch erreicht, dass zwischen der Adapterhülse und der Spannzange ein Luftübertragungsadapter vorgesehen ist, in den eine oder mehrere Luftkanäle eingearbeitet sind. Die Eingangsseite der Luftkanäle ist an eine Druckpumpe und an eine Auswerte-Einrichtung angeschlossen und die Ausgänge der Luftkanäle sind der Anlagefläche der Adapterhülse oder dem Anschlagsring im Inneren der Aufnahmeöffnung zugeordnet. Sobald demnach die Spannzange auf der Anlagefläche oder dem Anschlagring aufliegt, wird mittels der Druckpumpe ein Druckzustand durch Einpressen von Umgebungsluft in den Kanal herbeigeführt. Sollte einer der Ausgangsseiten der Luftkanäle durch die Spannzange nicht abgedeckt sein, entweicht die Umgebungsluft und der Druckzustand erreicht ein niedriges Druckniveau. Dies ist von der Auswerteeinrichtung feststellbar, sodass mit Hilfe des eingestellten Druckes ohne Weiteres überprüft werden kann, ob die Spannzange vollflächig, also über den gesamten Umfang, an der Anschlagsfläche der Adapterhülse oder dem Anschlagsring im Inneren der Aufnahmeöffnung anliegt.

In der Zeichnung ist ein erfindungsgemäßes Ausführungsbeispiel einer Spann-Vorrichtung dargestellt, die nachfolgend näher erläutert ist. Im Einzelnen zeigt:
- Figur 1a: eine Spann-Vorrichtung, bestehend aus einem Futterkörper, in dem eine Aufnahmeöffnung eingearbeitet ist, einem in der Aufnahmeöffnung axial beweglichen Zugelement, einer in die Aufnahmeöffnung eingesetzten Adapterhülse und einer in die Adapterhülse eintauchende Spannzange, durch die ein Gegenstand lageorientiert und zentriert gehalten ist, im Schnitt, und im Ausgangszustand,
- Figur 1b: die Vorrichtung gemäß Figur 1a, in Explosionsdarstellung,
- Figur 2a: eine Weiterbildung der Spann-Vorrichtung gemäß Figur 1a, mit einem zwischen der Adapterhülse und der Spannzange angeordneten Luft-übertragungsadapter, in den drei Luftkanäle eingearbeitet sind, um den korrekten Spannzustand der Spannzange zu überprüfen,
- Figur 2b: die Spann-Vorrichtung gemäß Figur 2a, die einen im Futterkörper vorgesehen Anschlag aufweist, in Explosions-Darstellung
- Figur 2c: die Spann-Vorrichtung gemäß Figur 2a, mit einer Druckpumpe und einer Auswerteeinrichtung zur Überprüfung des Spannzustandes, und im Spannzustand,
- Figuren 3a bis 3c: die Spann-Vorrichtung gemäß Figur 1b, mit unterschiedlich ausgestalteten Gegenständen und einer daran angepassten Spannzange.

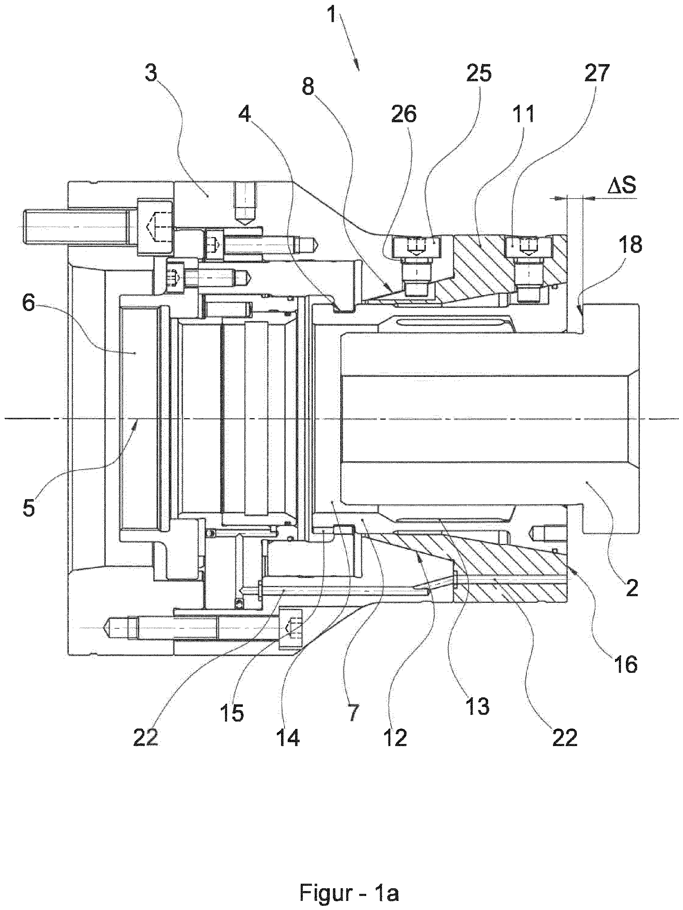

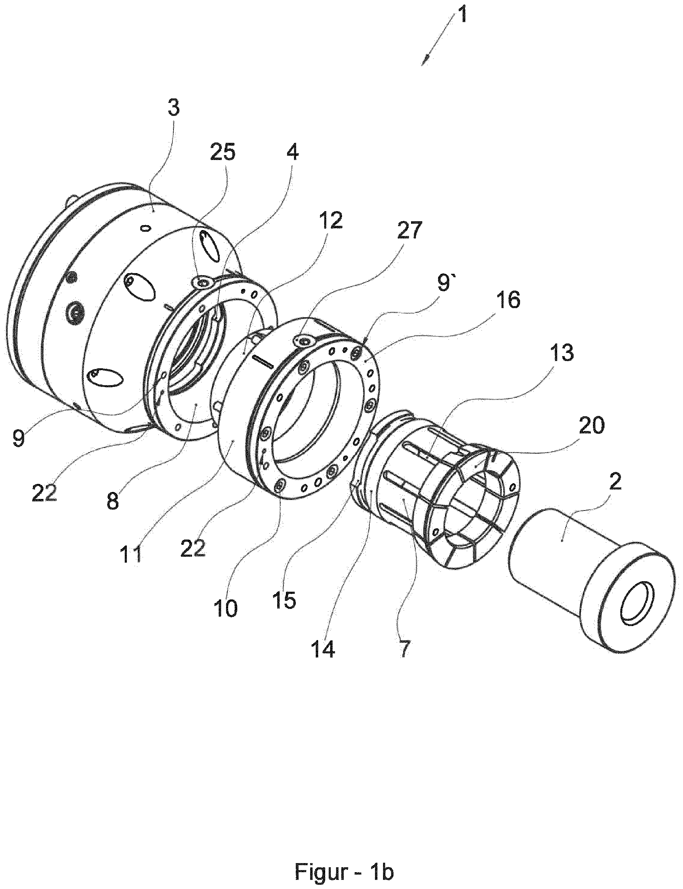

In den Figuren 1a und 1b ist eine Spann-Vorrichtung 1 zu entnehmen, durch die ein Gegenstand 2 zentriert und wiederholungsgenau abgestützt werden soll. Der Gegenstand 2 kann dabei als zu bearbeitendes Werkstück an einer Werkzeugmaschine, als Werkzeug oder dergleichen ausgestaltet sein. Die Außenkontur des jeweils einzuspannenden Gegenstandes 2 kann beliebig sein.

Die Spann-Vorrichtung 1 besteht im Wesentlichen aus einem Futterkörper 3, in den eine Aufnahmeöffnung 4 eingearbeitet ist. Die Längsachse der Aufnahmeöffnung 4 ist mit der Bezugsziffer 5 versehen und dient als Bezugsgröße zur Ausrichtung des jeweils an dem Futterkörper 3 abzustützenden Gegenstandes 2. Die Rotationsachse oder Symmetrieachse des jeweiligen Gegenstandes 2 soll demnach während des Spannzustandes koaxial zu der Längsachse 5 ausgerichtet sein, sodass der Gegenstand 2 in einer definierten Position an dem Futterkörper 3 abgestützt ist. Da oftmals eine Vielzahl von identischen Gegenständen 2 an dem Futterkörper 3 zu deren Bearbeitung abzustützen sind, ist es erforderlich, dass beim Auswechseln der baugleichen Gegenstände 2 eine wiederholungsgenaue Fixierung in Bezug auf die Längsachse 5 der Aufnahmeöffnung 4 erfolgt.

Im Inneren des Futterkörpers 3 ist ein Zugelement 6 vorgesehen, das beispielsweise als Pneumatik- oder Hydraulikkolben ausgestaltet ist. Das Zugelement 6 kann auch durch einen E-Motor angetrieben sein. Das Zugelement 6 ist axial beweglich in der Aufnahmeöffnung 4 des Futterkörpers 3 gelagert und bewegt sich demnach von einer Ausgangsposition in eine Spannposition, wie dies nachfolgend näher erläutert ist.

Zur Fixierung des jeweils zu bearbeitenden Gegenstandes 2 an dem Futterkörper 3 dient eine Spannzange 7, die trieblich mit dem jeweiligen Zugelement 6 in Wirkverbindung steht. Die Innenkonturen der Spannzange 7 ist dabei an die Außenkontur des jeweils einzuspannenden Gegenstandes 2 angepasst, sodass der jeweilige Gegenstand 2 in das Innere der Spannzange 7 eingesetzt werden kann.

Im Eingangsbereich der Aufnahmeöffnung 4 ist eine konisch ausgestaltete Zentrierfläche 8 angearbeitet. Die Zentrierfläche 8 ist somit von außen nach innen, also in Richtung der Längsachse 5 geneigt und soll eine in die Aufnahmeöffnung 4 eintauchende bzw. einzusetzende Adapterhülse 11 in Bezug auf die Längsachse 5 ausrichten und an dem Futterkörper 3 abstützen.

Die Außenkontur der jeweiligen Adapterhülse 11 ist an die Innenkonturen der Aufnahmeöffnung 4 angepasst. Zudem ist die Adapterhülse 11 nach ihrem Einsetzen verdrehsicher an dem Futterkörper 3 durch eine in eine in den Futterkörper 3 eingearbeitete Gewindebohrung 26 eingedrehten Befestigungsschrauben 25 fixiert. Folglich kann sich die Adapterhülse 11 nach dem Einsetzen weder um die eigene Achse noch in Längsrichtung bewegen.

Im Inneren der Adapterhülse 11 ist eine konisch verlaufende Anlagefläche 12 vorgesehen, die im Spannzustand mit der Außenkontur der Spannzange 7 zusammenwirkt. Die Außenkontur der Spannzange 7 liegt demnach an der Anlagefläche 12 der Adapterhülse 11 im eingesetzten Zustand bzw. während des Spannzustandes an.

In die Mantelfläche der Spannzange 7 sind mehrere Schlitze 13 eingearbeitet, die parallel zu der Längsachse 5 der Aufnahmeöffnung 4 im montierten Zustand verlaufen. Die Schlitze 11 weisen über ihre Länge unterschiedlich bemessene Breiten auf. Aufgrund der eingearbeiteten Schlitze 13 entstehen in der Spannzange 7 Segmente oder Greif-Finger 20, die auf den einzuspannenden Gegenstand 2 einwirken. Darüber hinaus besteht die Spannzange 7 aus einem Haltering 14, an dem die jeweiligen Segmente oder Greif-Finger 20 angeformt und von diesem abstehen. An dem Haltering 14 sind vorzugsweise drei Bajonettverschlüsse 15 eingearbeitet, die in entsprechend damit korrespondierenden Aufnahmeöffnungen, die an dem Zugelement 6 vorgesehen sind, zur trieblichen Koppelung der Spannzange 7 mit dem Zugelement 6 vorhanden sind. Die Bajonettverschlüsse 15 des Halteringes 14 werden demnach während des Montagevorganges in die entsprechenden Aufnahmeöffnungen des Zugelementes 6 eingesetzt und durch Verdrehen, beispielsweise um 20° bis 30°, in diese eingeschoben. Folglich entsteht zwischen den Bajonettverschlüssen 15 des Halteringes 14 und den entsprechenden an dem Zugelement 6 vorgesehenen Aufnahmen eine Art Hinterschneidung, durch die die axial wirkenden Kräfte des Zugelements 6 auf die Spannzange 7 übertragen sind. Um ein unabsichtliches bzw. unerwünschtes Herausdrehen des Halteringes 14 aus den Aufnahmeöffnungen des Zugelements 6 zu verhindern, ist eine Schraube 27 vorgesehen, die durch die Adapterhülse 11 hindurchgesteckt ist und mittels Reibung auf die Außenseite der Spannzange 7 einwirkt, sodass diese gegen Verdrehen gesichert ist.

Wenn nunmehr die Spannzange 7 in die Adapterhülse 11 eingesetzt und die triebliche Wirkverbindung zwischen der Spannzange 7 und dem Zugelement 6 hergestellt ist, kann die Spannzange 7 durch Zurückfahren des Zugelements 6 aus dessen Ausgangsposition in die Spannstellung in das Innere der Aufnahmeöffnung 4 gezogen werden. Der jeweilige Gegenstand 2 ist im Inneren der Spannzange 7 angeordnet. Da die Adapterhülse 11 eine konisch verlaufende Anlagefläche 12, die von außen nach innen geneigt ist, aufweist, werden die von den Schützen 13 gebildeten Segmente oder Greif-Finger 20 in Richtung der Längsachse 5 zusammengedrückt. Somit verringert sich der Innendurchmesser der Spannzange 7, wodurch eine radial verlaufende Spannkraft entsteht, die unmittelbar auf die Oberfläche des einzuspannenden Gegenstandes 2 einwirkt. Durch diese radial verlaufende Spannkraft ist der jeweilige Gegenstand 2 in der Spannzange 7 lageorientiert gehalten, da die Segmente 20 synchron aufgrund der gleichmäßig verlaufenden konischen Anlagefläche 12 der Adapterhülse 11 in Richtung des Gegenstandes 2 zugestellt sind, entsteht eine zentrierte Positionierung des Gegenstandes 2 an der Spannzange 7.

Die Adapterhülse 11 ist zunächst in die Aufnahmeöffnung 4 des Futterkörpers 3 eingesetzt. An der außenseitigen Stirnseite des Futterkörpers 3 sind Gewindebohrungen 9 eingearbeitet und an der außenseitigen Stirnseite der Adapterhülse 11 sind entsprechende Durchgangsöffnungen 9' vorgesehen. Die Gewindebohrungen 9 und die Durchgangsöffnung 9' sind fluchtend zueinander zu positionieren und anschließend kann die Adapterhülse 11 mittels Gewindeschrauben an dem Futterkörper 3 befestigt werden.

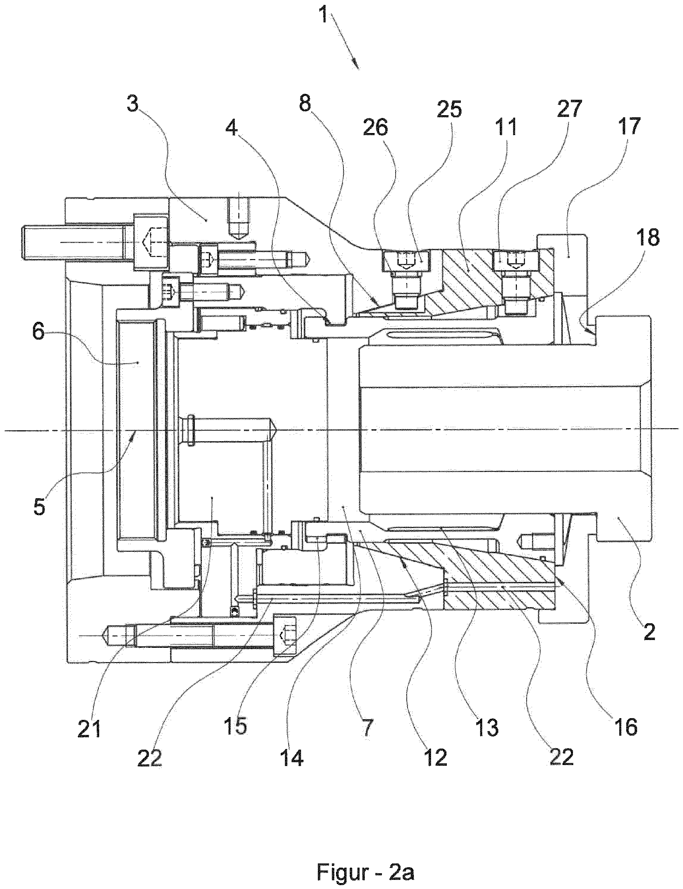

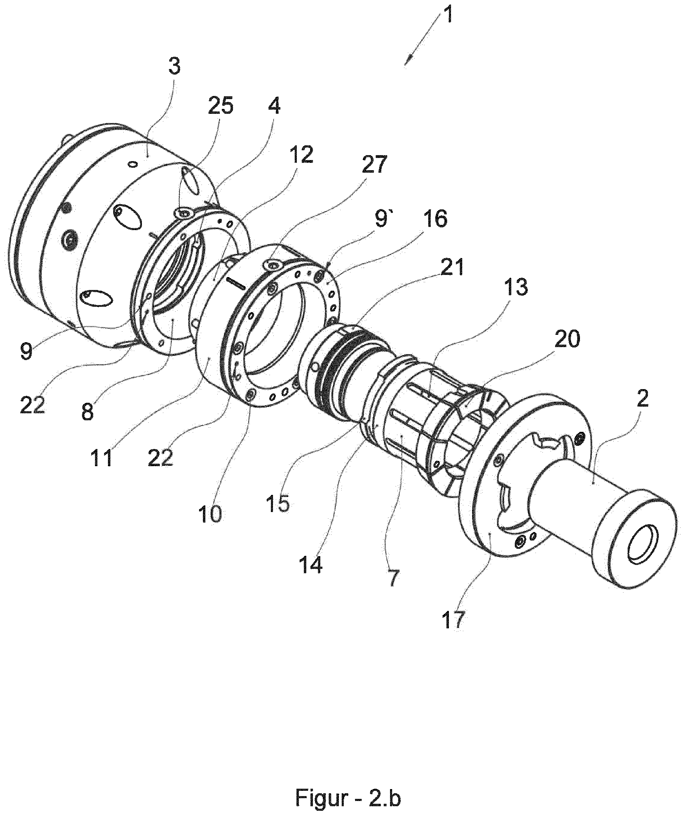

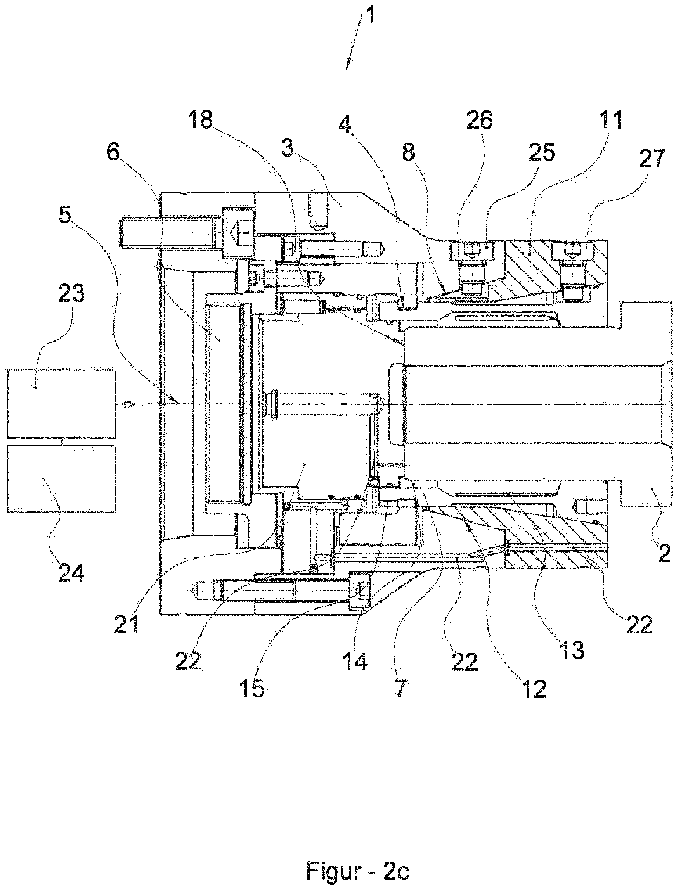

In den Figuren 2a, 2b und 2c ist eine Weiterbildung der erfindungsgemäßen Spann-Vorrichtung 1 gezeigt. Zusätzlich ist nämlich ein Luftübertragungsadapter 21 zwischen der Adapterhülse 11 und der Spannzange 7 positioniert. In die Luftübertragungsadapter 21 sind drei Luftkanäle 22 eingearbeitet, die mit den im Futterkörper 3 vorgesehenen Luftkanälen 22 ein gemeinsames Druckluftsystem bilden. Die Eingangsseite der Luftkanäle 22 sind mit einer Druckpumpe 23 und einer Auswerteeinrichtung 24 verbunden.

Darüber hinaus sind entweder an der Spannzange 7 ein Anschlagring 17 oder im Inneren der Aufnahmeöffnung 4 eine ringförmige Anlagefläche 18 vorgesehen. Sobald demnach die Spannzange 7 durch das Zugelement 6 in das Innere des Futterkörpers 3 gezogen ist, gelangen der Anschlagringring 17 bzw. die Spannzange 7 an die ringförmige Anlagefläche 18. Dadurch ist zum einen der Verstellweg Δs der Spannzange 7 mechanisch begrenzt und zum anderen kann die derart erzeugte Anlagepositionierung zwischen der Spannzange 7 und der Außenseite der Adapterhülse 11 bzw. des Halteringes 14 der Spannzange 7 an der innenseitigen ringförmigen Anlagefläche 18 mit Hilfe des Luftübertragungsadapters 21 auf die gewünschte exakte Positionierung überprüft werden. Dies erfolgt dadurch, dass in den Luftkanäle 22 des Luftübertragungsadapters 21 durch die Druckpumpe 23 ein Überdruck durch die eingepresste Umgebungsluft entsteht. Wenn die Anschlagring 17 an der Adapterhülse 11 flächenbündig anliegt bzw. die Spannzange 7 flächenbündig an der ringförmigen Anlagefläche 18 aufsetzt, dann sollte der Überdruck in den Luftkanal 22 konstant sein, da deren Ausgänge luftdicht verschlossen sind. Die Luftkanäle 22 münden auf der Außenseite der Adapterhülse 11 und der erzeugte Luftüberdruck wirkt unmittelbar auf den Anschlagring 17 ein oder die Luftkanäle 22 münden im Bereich der ringförmigen Anlagefläche 18 und werden demnach von dem Haltering 14 der Spannzange 7 verschlossen. Sollten zwischen der Spannzange 7 und dem Anschlagring 17 bzw. dem Haltering 14 der Spannzange 7 und der ringförmigen Anlagefläche 18 ein Luftspalt aufgrund von einer schrägen oder verkanteten Positionierung der Spannzange 7 entstanden sein, dann entweicht die in den Luftkanal 22 eingepresste Umgebungsluft und der Luftdruckdruck unterschreitet einen vorgegebenen Grenzwert. Dies kann von der den Luftkanälen 22 zugeordnete Auswerteeinrichtung 24 erfasst sein, sodass durch diese eine entsprechende Überprüfung erfolgt und beispielsweise die Werkzeugmaschine stillgesetzt ist, falls eine fehlerhafte Positionierung der Spannzange 7 festgestellt ist.

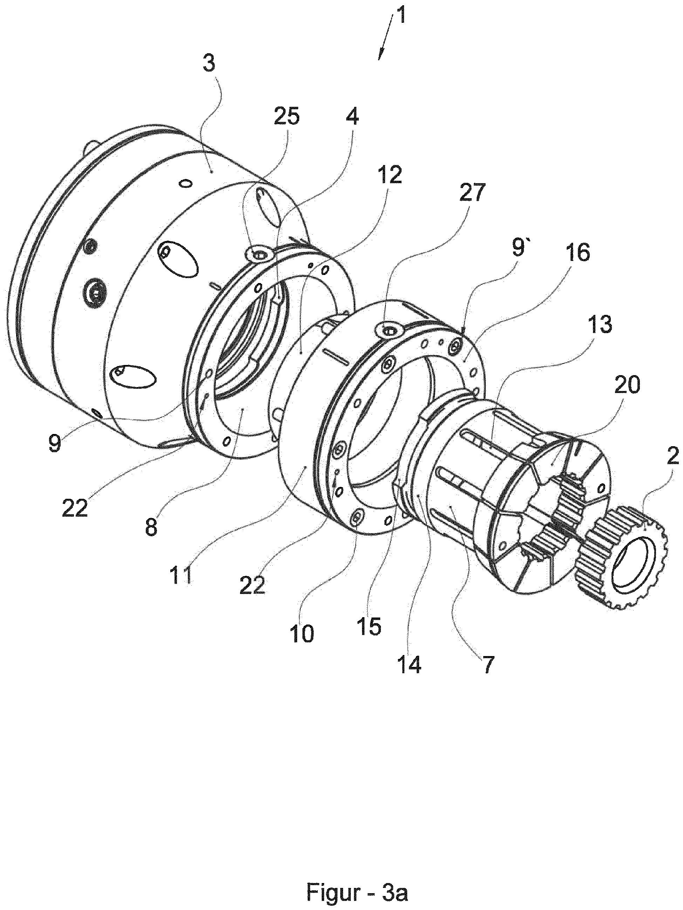

In Figur 3a ist gezeigt, dass durch die Spannzange 7 auch ein Gegenstand 2 in Form eines Zahnrades mit einer Außenverzahnung gehalten ist. Das derart ausgestaltete Zahnrad 2 ist im außenseitigen Bereich der Spannzange 7 durch diese in der zuvor beschriebenen Art und Weise zu halten. Zu diesem Zweck weist die Innenkontur der Spannzange 7 eine Innenverzahnung auf, die mit der Außenverzahnung des Gegenstandes 2 korrespondiert. Somit wirken die Segmente 20 auf die Außenverzahnung des Gegenstandes 2 ein.

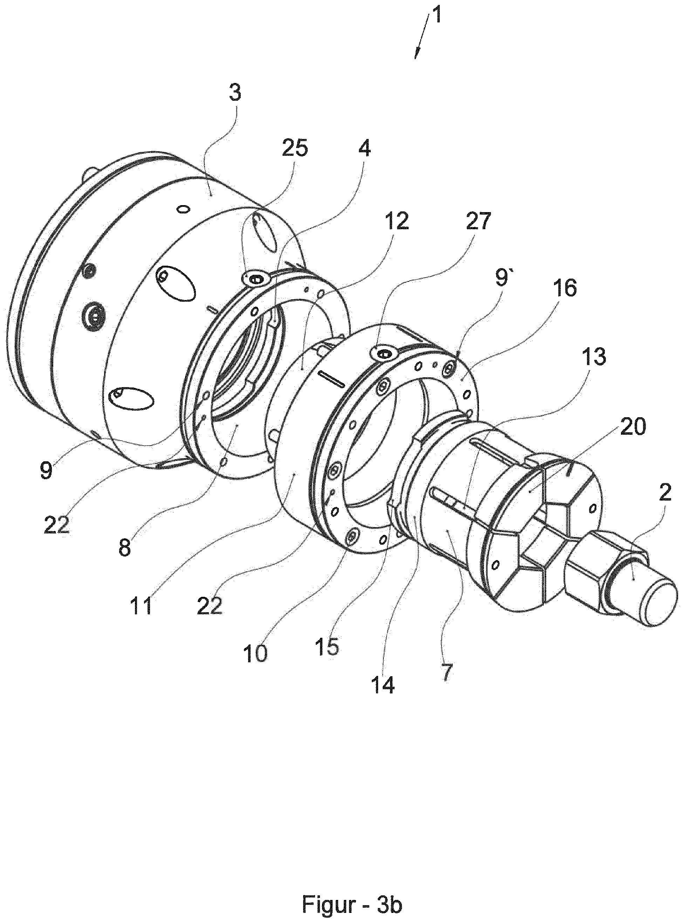

Aus Figur 3b ist ersichtlich, dass auch ein kubischer Gegenstand 2 in der Spannzange 7 gehalten ist. Die mehreckförmige Außenkontur des Gegenstandes 2 ist demnach im Inneren der Spannzange 7 nachgebildet, sodass der Gegenstand 2 bereichsweise in das Innere der Spannzange 7 eingesetzt und von den dort entsprechend gestalteten Flächen abgestützt ist.

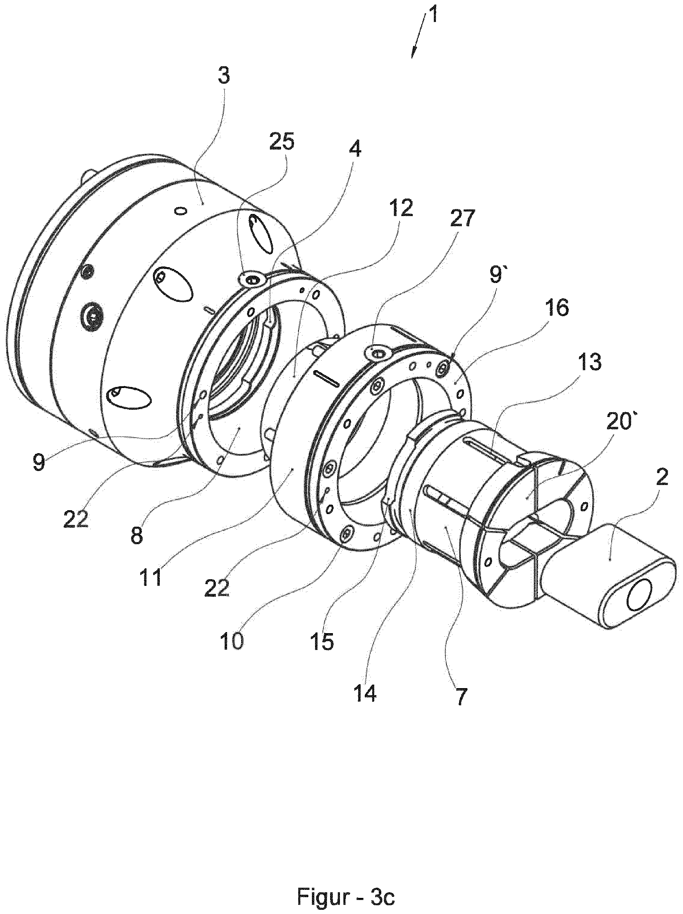

Figur 3c zeigt eine weitere Variante der Geometrie eines einzuspannenden Gegenstandes 2, der nunmehr eine elliptische Grundfläche aufweist. Die Spannzange 7 bildet demnach die Außenkontur des elliptischen Gegenstandes 2 nach, wodurch erneut eine lageorientierte und zentrierte Fixierung des Gegenstandes 2 erreicht ist.

Der zu haltende Gegenstand 2 gibt demnach die Innenkontur der Spannzange 7 vor. Die in dem Futterkörper 3 eingearbeitete Aufnahmeöffnung 4 kann üblicherweise nicht verändert werden, sodass die jeweilige Adapterhülse 11 den Zwischenraum zwischen der Innenwand der Aufnahmeöffnung 4 und der Spannzange 7 überbrückt. Zudem kann die innere Kontur der Adapterhülse 11 an die Außenkontur der Spannzange 7 nach Art eines Bausatzes angepasst sein. Die Spannzange 7 und die jeweilige Adapterhülse 11 bilden demnach ein Montagepaar. Die Adapterhülse 11 dient demnach dazu, den Zwischenraum zwischen der Aufnahmeöffnung 4 und der Spannzange 7 auszugleichen und die Adapterhülse 11 gleicht die Außenkontur der verwendeten Spannzange 7 gegenüber der Aufnahmeöffnung 4 des Futterkörpers 3 aus.

## Patentansprüche

1. Spann-Vorrichtung (1) zur zentrierten und wiederholungsgenauen Abstützung eines Gegenstandes (2), insbesondere ein zu bearbeitendes Werkstück an einer Werkzeugmaschine, ein Werkzeug od. dgl.,
bestehend aus,
- einem Futterkörper (3), in dem eine Aufnahmeöffnung (4) eingearbeitet ist, die eine Längsachse (5) als Zentrierbezugsgröße für den Gegenstand (2) aufweist,
- einem Zugelement (6), das axial beweglich in der Aufnahmeöffnung (4) gelagert ist,
- einer Spannzange (7), die zentriert zu der Längsachse (5) der Aufnahmeöffnung (4) in diese eingesetzt ist und die trieblich mit dem Zugelement (6) gekoppelt ist,
- und aus einer konischen Zentrierfläche (8), die an der Innenwand im Eingangsbereich der Aufnahmeöffnung (4) angearbeitet ist,
**dadurch gekennzeichnet,**
**dass** eine Adapterhülse (11) vorgesehen ist, die zwischen der Aufnahmeöffnung (4) des Futterkörpers (3) und der Spannzange (7) im montierten Zustand lageorientiert und zentriert an der konischen Zentrierfläche (8) angeordnet ist,
**dass** die Außenkontur der Adapterhülse (11) an die Innenkontur der Aufnahmeöffnung (4) angepasst ist,
**dass** die Spannzange (7) axial bewegbar in der Adapterhülse (11) gelagert ist,
und **dass** die Innenkontur der Adapterhülse (11) eine nach innen geneigte Anlagefläche (12) aufweist, die mit der Außenkontur der Spannzange (7) derart zusammenwirkt, dass der Innendurchmesser der Spannzange (7) beim Einziehen der Spannzange (7) durch das Zugelement (6) in den Futterkörper (3) reduziert ist und dadurch der Gegenstand (2) durch die Spannzange (7) zentriert und lageorientiert gehalten ist.

2. Spann-Vorrichtung nach Anspruch 1,
**dadurch gekennzeichnet,**
**dass** in die Adapterhülse (11) eine Vielzahl von Schlitzen (13) eingearbeitet sind, die parallel zu der Längsachse (5) der Aufnahmeöffnung (4) im montierten Zustand verlaufen, dass die Adapterhülse (11) einen Haltering (14) aufweist, der mit dem Zugelement (6) gekoppelt ist und durch der die vereinzelten Segmente der Adapterhülse, die benachbart zu den Schlitzen (13) verlaufen, gehalten sind.

3. Spann-Vorrichtung nach Anspruch 2,
**dadurch gekennzeichnet,**
**dass** der Haltering (14) der Adapterhülse (11) mittels mehrerer zueinander beabstandeter Bajonettverschlüsse (15) an dem Zugelement (6) eingesteckt und durch Verdrehen an diesem gesichert ist.

4. Spann-Vorrichtung nach Anspruch 2 oder 3,
**dadurch gekennzeichnet,**
**dass** die Schlitze (13) in ihrer Länge unterschiedlich breit bemessen sind.

5. Spann-Vorrichtung nach einem der vorgenannten Ansprüche,
**dadurch gekennzeichnet,**
**dass** an der außenseitigen Stirnseite (16) der Adapterhülse (11) ein Anschlagsring (17) angeformt ist, der beim Einziehen der Spannzange (7) in die Aufnahmeöffnung (4) an dieser anliegt und den Verstellweg (Δs) der Spannzange (7) begrenzt,
oder dass im Inneren des Futterkörpers (3) eine ringförmige Anlagefläche (18) vorgesehen ist, auf die die Spannzange (7) beim Einziehen anliegt und der Verstellweg (Δs) der Spannzange (7) begrenzt ist.

6. Spann-Vorrichtung nach Anspruch 5,
**dadurch gekennzeichnet,**
**dass** zwischen der Adapterhülse (11) und der Spannzange (7) ein Luftübertragungsadapter (21) vorgesehen ist, in den mehrere Luftkanäle (22) eingearbeitet sind und dass eine den Eingängen der Luftkanäle zugeordnete Druckluftpumpe (23) und einer Auswerteeinrichtung (24) vorgesehen sind und die Ausgangsseite der Luftkanäle (22) dem Anlagering (17) oder der Anlagefläche (18) zugewandt sind und dass die Druckzustände während des Spannvorganges durch die Druckluftpumpe (23) und die Auswerteeinrichtung (24) eingestellt bzw. überwacht sind.

7. Spann-Vorrichtung nach einem der vorgenannten Ansprüche,
**dadurch gekennzeichnet,**
**dass** die Adapterhülse (11) mittels einer Schraube (25) gegen Verdrehen gesichert ist, die in eine in den Futterkörper (3) eingearbeiteten Gewindebohrung (26) eingedreht ist.

8. Spann-Vorrichtung nach einem der vorgenannten Ansprüche,
**dadurch gekennzeichnet,**
**dass** die Spannzange (7) mittels einer Schraube (27) an dem Zugelement (6) gegen Verdrehen gesichert ist.
